# EUROPEAN PATENT APPLICATION

(11) **EP 1 796 329 A1**
(43) Date of publication of application: **13.06.2007**
(21) Application number: 06006535.6
(22) Date of filing: 29.03.2006
(51) Int. Cl.: H04L 12/56

(54) **Radio network system, communication traffic changeover method for the same system, and traffic processing apparatus, line multiplexing apparatus for the same system**

(30) Priority: 08.12.2005 JP 2005354731
(71) Applicant: FUJITSU LIMITED, Kawasaki-shi, Kanagawa 211-8588 (JP)
(72) Inventor: Hara, Masayuki, c/o Fujitsu Limited, Nakahara-ku, Kawasaki-shi, Kanagawa 211-8588 (JP)
(74) Representative: Sunderland, James Harry

(57) **Abstract**

When a congested state is detected with respect to a traffic processor (20-1), the ATM multiplexer (50) performs a line changeover process so that at least a part of communication traffic to be processed by the traffic processing apparatus (20-1) is processed by another traffic processing apparatus (20-2). This arrangement makes it possible to continue communication without causing a system down or call generation/reception limitation, even when traffic exceeds the maximum traffic which can be processed by the radio network system, thereby causing congestion.

## Description

### CROSS REFERENCE TO RELATED APPLICATIONS

This application is based on and hereby claims priority to Japanese Application No. 2005-354731 filed on December 8, 2005 in Japan, the contents of which are hereby incorporated by reference.

### BACKGROUND OF THE INVENTION

### (1) Field of the Invention:

The present invention relates to a radio network system and a communication traffic changeover method for the same system. The invention also relates to a traffic processor, a line multiplexer, and a host apparatus for use in the same system. The invention relates to an art suitable for use in making it possible to continue communication in a radio network system even when congestion occurs in the network system.

### (2) Description of the Related Art:

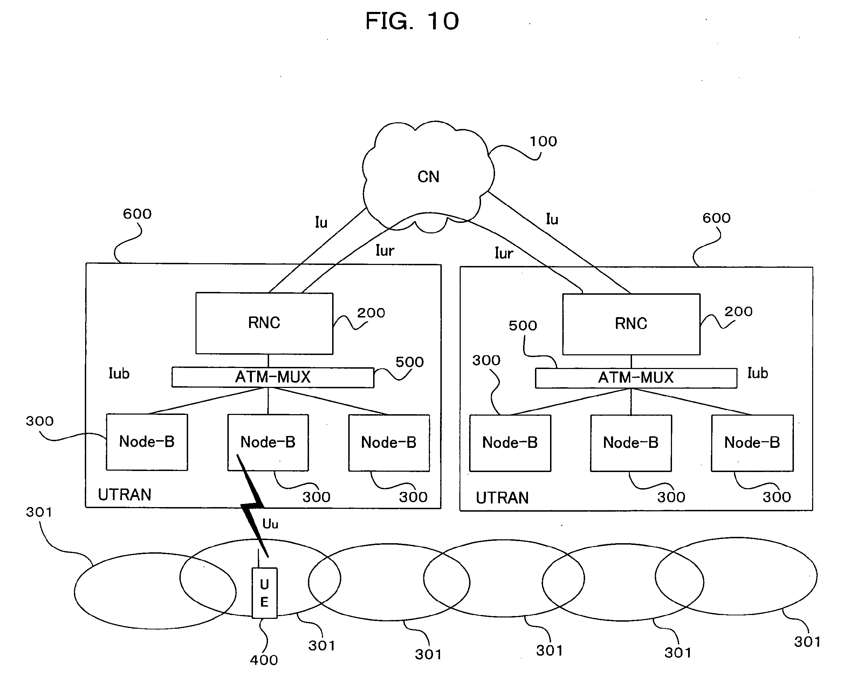

FIG. 10 is a block diagram showing a network configuration of a 3GPP (Third Generation Partnership Project) network system. The 3GPP system of FIG. 10 normally includes: a host network [Core Network (CN)] 100 ; one or more (two in FIG. 10) Radio Network Controllers (RNCs) 200 which are communicably connected to the core network 100; one or more radio base stations (Node-Bs) 300 (three for each RNC 200 in FIG. 10) communicably connected to the RNCs 200; a user (mobile) terminal (UE: User Equipment) 400 which communicates by radio with the nearest radio base station 300 in a radio service area 301 formed by the radio base station 300.

In this instance, a network 600, formed by RNCs 200 under control of the CN 100 and radio base stations 300 under control of the RNCs 200, is called a UTRAN (UMTS Terrestrial Radio Access Network). As to interfaces between the nodes, an interface between UE 400 and a radio base station 300 is called "Uu", and physical bearer communication is radio communication. An interface between a radio base station 300 and an RNC 200 is called "Iub"; an interface between an RNC 200 and a CN 100 is called "Iu"; an interface between an RNC 200 and an RNC 200 is called "Iur", and their physical bearer communication is performed by wire communication. Further, as to the direction in which data flows, the direction from the CN 100 to the UE 400 is called DownLink (DL) ; the direction from the UE 400 to the CN 100 is called UpLink (UL).

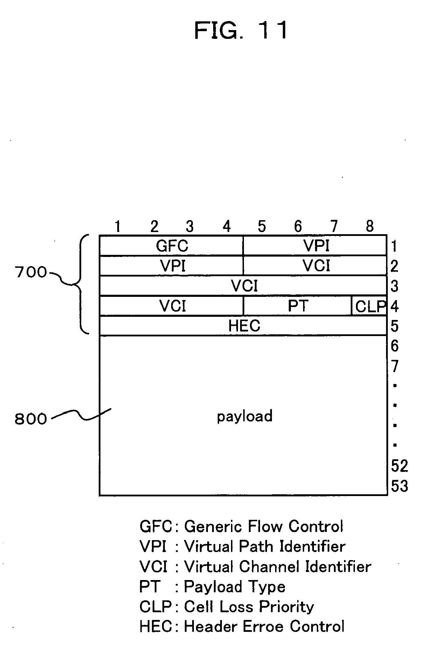

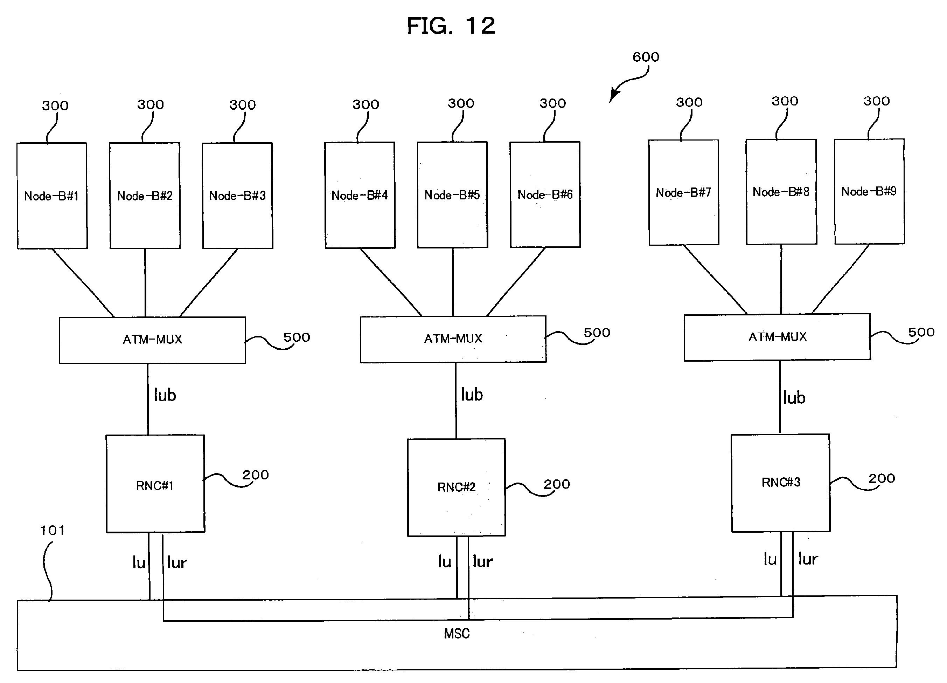

As shown in FIG. 12, the apparatus construction in the above network 600 is as follows: two or more (three in FIG. 12) RNCs 200 are under control of a Mobile Switching Center (MSC) 101, which is a host apparatus. Further, two or more (three for each RNC 200 in FIG. 12) radio base stations 300 are under control of each RNCs 200. As shown in FIG. 10 and FIG. 12, an ATM multiplexer (ATM-MUX) can be provided between each RNC 200 and the radio base stations 300 which are under control of the RNC 200. In this case, signals between the apparatuses and user data are transferred using ATM (Asynchronous Transfer Mode) cells. As shown in FIG. 11, for example, an ATM cell has a 53-octet format including a 5-octet header portion 700 and a 48-octet data portion (payload) 800. In accordance with information such as VPI (Virtual Path Identifier)/VCI (Virtual Channel Identifier) set in the header portion 700, ATM cells are subjected to switching in the ATM multiplexer 500 to be transferred to their destined apparatuses.

That is, for example, ATM cells sent from radio base stations 300 which are under control of an RNC 200 are multiplexed by the ATM multiplexer 500 and then transferred to the RNC 200. Further, the multiplexed ATM cells are transferred to an ATM multiplexer 500 which is under control of another RNC 200 via the MSC 101. On this ATM multiplexer 500, the ATM cells are subjected to switching in accordance with information in the above-mentioned header portion 700, and the ATM cells are transferred to their destined radio base stations 300.

The following patent document 1 proposes a previous art of mobile communication. This art aims at preventing concentration of traffic in a mobile communication system which includes multiple radio base stations by distributing communication traffic (hereinafter simply called "traffic") of a radio base station whose traffic has become high to the adjacent base station. To realize this, in the art, a mobile switching center sets and holds a traffic distribution activation threshold value T1 and a traffic distribution deactivation threshold value T2 for each radio base station. When the rate of call channel use exceeds the threshold value T1 , the mobile switching center decreases a transmission output of the downlink control channel of the corresponding radio base station, and transmits a channel selection execution instruction to the downlink control channel. After that, when the rate of call channel use becomes equal to or smaller than the threshold value T2, the mobile switching center restores the output of the downlink control channel and transmits a channel selection re-execution instruction to the downlink control channel of the neighboring radio base stations.

With this arrangement, of mobile telephone terminals which are tuned to the radio base station whose call channel use rate becomes high, mobile telephone terminals which are located in an area where the service area of the current radio base station overlaps the service area of the adjacent radio base station are made to be tuned to the adjacent radio base station, by decreasing the radio transmission output of the downlink control channel and sending out a channel selection re-execution instruction onto the downlink control channel. As a result, useless call channel acquisition requests from mobile telephone terminals, transmission of a direct retry signal with respect to the communication channel acquisition requests from the host apparatus, and control channel reselection of mobile telephone terminals which have received the direct retry signal from the host apparatus, can be omitted. Accordingly, it becomes possible to decrease the uplink and downlink control channel traffic.

[Patent Document 1] Japanese Patent Application Laid-open No. HEI 5-63635

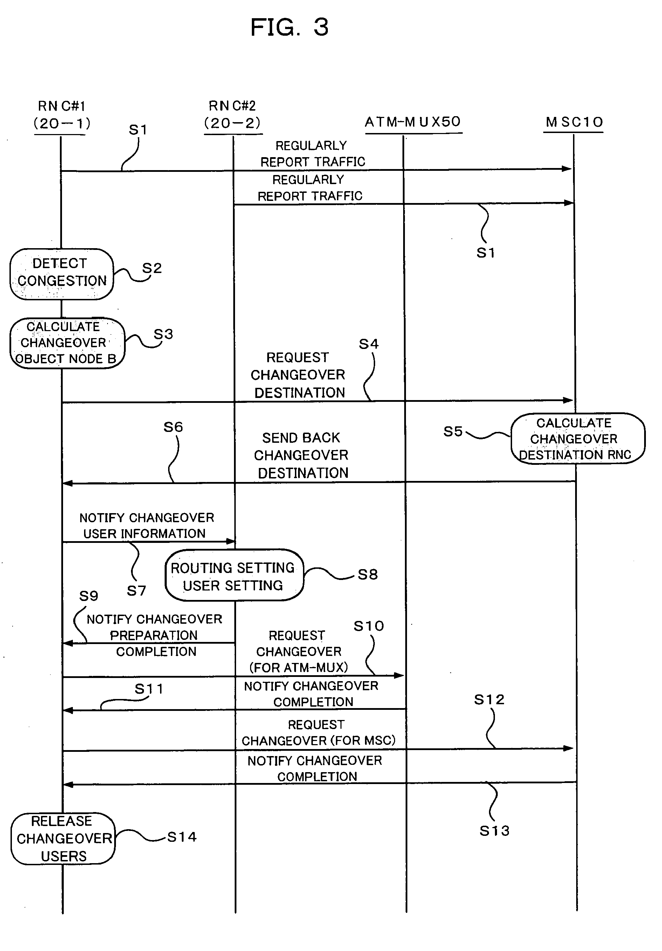

However, in the network 600 described above with reference to FIG. 10 and FIG. 12, the processing performance of the constituent apparatuses (for example, RNC 200) is limited. Thus, if traffic exceeding the limit is generated, a limitation in call generating/receiving (for example, no more users are accommodated) can be initiated, or alternatively a system down can be caused. If such a limitation in call generating/receiving or a system down is caused, it becomes impossible for users (UE 400) who are under control of the RNC 200 to receive services. FIG. 3, for example, shows a state in which too much traffic occurs in the RNC 200 with RNC number #1, and the RNC 200 is in a congested state.

The art of the above patent document 1 is just an art in which a transmission output of a downlink control channel from the radio base station to the mobile station is controlled according to the traffic amount. Thus, simply applying this art to the above-described network 600 (RNCs 200) will not solve the above issue.

### SUMMARY OF THE INVENTION

With the foregoing problems in view, it is an object of the present invention to make it possible to continue communication even when a congestion state occurs in a radio network system due to generation of traffic exceeding the maximum traffic amount which can be processed by the network system (for example, RNCs as traffic processors), without causing a system down or limitation in generation/reception of calls.

In order to accomplish the above object, according to the present invention, there are provided a radio network system and a communication traffic changeover method for the same system, and a traffic processor, a line multiplexer and a host apparatus as follows.
(1) As a generic feature, there is provided a communication traffic changeover method for use in a radio network system including: one or more mobile terminals; base station apparatus which communicates with the mobile terminals by radio communication; a plurality of traffic processing apparatuses communicably connected to the base station apparatus, which traffic processing apparatuses process communication traffic between the base station apparatus and the traffic processing apparatuses; a line multiplexing apparatus which multiplexes lines between the base station apparatus and the traffic processing apparatuses, the method comprising: on the line multiplexing apparatus, performing a line changeover process, if a congestion state is detected with respect to any one of the traffic processing apparatuses , in such a manner that at least a part of communication traffic to be processed on the traffic processing apparatus is processed on another traffic processing apparatus.
(2) As another generic feature, there is provided a radio network system, comprising: a base station apparatus which communicates with one or more mobile terminals by radio communication; a plurality of traffic processing apparatuses communicably connected to the base station apparatus, which traffic processing apparatuses process communication traffic between the base station apparatus and the traffic processing apparatuses; a line multiplexing apparatus for multiplexing lines between the base station apparatus and the traffic processing apparatuses, the multiplexing apparatus performing a line changeover process, if a congestion state is detected with respect to any one of the traffic processing apparatuses, in such a manner,that at least a part of communication traffic to be processed on the traffic processing apparatus is processed on another traffic processing apparatus.
(3) As yet another generic feature, there is provided A traffic processing apparatus for use in a radio network system which includes: one or more mobile terminals; base station apparatus which communicates with the mobile terminals by radio communication; a plurality of traffic processing apparatuses communicably connected to the base station apparatus, which traffic processing apparatuses process communication traffic between the base station apparatus and the traffic processing apparatuses; a line multiplexing apparatus which multiplexes lines between the base station apparatus and the traffic processing apparatuses, the traffic processing apparatus comprising: a traffic processing unit which processes the communication traffic; congestion detecting means which monitors a processing state of a traffic processing unit and detects a congested state; and control means which control a line changeover process performed by the line multiplexing apparatus in such a manner that when the congestion detecting means detects a congestion state, at least a part of communication traffic to be processed by the corresponding traffic processing apparatus is processed by another traffic processing apparatus.
(4) As a preferred feature, the control means includes: a changeover destination request issuing unit, which issues, when the congestion detecting means detects a congestion state, a changeover destination request for requesting the host apparatus, which is communicably connected to each of the plurality of traffic processing apparatus for managing the plurality of traffic processing apparatus, for information about the above-mentioned another traffic processing apparatus; and a line changeover controlling unit which (*i*) receives the information about the above-mentioned another traffic processing unit, which is selected and determined by the host apparatus in response to the changeover destination request, as a response to the changeover destination request, and (*ii*) controls the line multiplexing apparatus to execute the line changeover process.
(5) As another preferred feature, the control means includes a changeover object base station line determining unit which determines the line of the base station apparatus that treats the communication traffic to be processed by the above-mentioned another traffic processing apparatus as a changeover object base station line.
(6) As yet another preferred feature, the changeover object base station line determining unit selects and determines the changeover object base station line so that communication traffic processed by the traffic processing unit is equal to or lower than a specific threshold value.
(7) As a further preferred feature, the changeover object base station line determining unit selects and determines, with priority, radio communication paths of a base station apparatus adjacent to the base station apparatus connected to the above-mentioned another traffic processing unit, which is the destination to which the communication traffic is to be changed, as the changeover object base station line.
(8) As a still further preferred feature, the control means includes: a recovery-from-congestion detecting unit which monitors a state of processing performed by the traffic processing unit and detects recovery from the congestion state; and a line changeback control unit which controls, when the recovery-from-congestion detecting unit detects recovery from the congestion state, a circuit changeover process of the line multiplexing apparatus and performs a line changeback process so that the communication traffic, which has been changed over to the above-mentioned another traffic processing apparatus, is changed back to the original traffic processing apparatus to be processes thereon.
(9) As another generic feature, there is provided a line multiplexing apparatus for use in a radio network system including: one or more mobile terminals; base station apparatus which communicates with the mobile terminals by radio communication; a plurality of traffic processing apparatuses communicably connected to the base station apparatus, which traffic processing apparatuses process communication traffic between the base station apparatus and the traffic processing apparatuses; a line multiplexing apparatus which multiplexes lines between the base station apparatus and the traffic processing apparatuses, the line multiplexing apparatus comprising: a line changeover unit which is capable of changing line connection between the base station apparatus and any of the traffic processing apparatuses; and a control unit which performs a line changeover process, if a congestion state is detected with respect to any one of the traffic processing apparatuses, in such a manner that at least a part of communication traffic to be processed on the traffic processing apparatus is processed on another traffic processing apparatus.
(10) As yet another generic feature, there is provided a host apparatus for use in a radio network system including: one or more mobile terminals; base station apparatus which communicates with the mobile terminals by radio communication; a plurality of traffic processing apparatuses communicably connected to the base station apparatus, which traffic processing apparatuses process communication traffic between the base station apparatus and the traffic processing apparatuses; a line multiplexing apparatus which multiplexes lines between the base station apparatus and the traffic processing apparatuses, which host apparatus is communicably connected to each of the plurality of traffic processing apparatuses to manage the plurality of traffic processing apparatuses, the host apparatus comprising: a traffic monitoring unit which monitors communication traffic of the plurality of the traffic processing apparatus; a changeover destination request receiving unit which receives a changeover destination request for requesting information about another traffic processing apparatus to which at least a part of communication traffic is to be destined, the request being issued by a traffic processing apparatus which has detected a congested state; a changeover destination processing apparatus determining unit which selects and determines, upon receipt of the changeover destination request by the changeover destination request receiving unit, the above-mentioned another traffic processing apparatus, which is to process the part of communication traffic, based on the monitoring result obtained by the traffic monitoring unit; and a notifying unit which notifies the traffic processing apparatus, which is an issuer of the changeover destination request, of the information about the determined destination traffic processing apparatus, which information is determined by the changeover destination processing apparatus determining unit.

Other objects and further features of the present invention will be apparent from the following detailed description when read in conjunction with the accompanying drawings.

The above-described invention makes it possible to continue communication without causing a system down or call generation/reception limitation even if a congested state occurs in a radio network system. Accordingly, even if a congested state occurs, it is possible to reliably avoid a state where users (mobile terminals) cannot perform communication or make telephone calls.

### BRIEF DESCRIPTION OF THE DRAWINGS

FIG. 1 is a block diagram showing a construction of a 3GPP (Third Generation Partnership Project) network system according to one preferred embodiment of the present invention;
FIG. 2 is a block diagram showing detailed constructions of an ATM multiplexing apparatus and RNCs of FIG. 1;
FIG. 3 is a sequence diagram for describing an operation (changeover sequence) of the system shown in FIG. 1 and FIG. 2;
FIG. 4 is a flowchart for describing procedures for calculating an original radio base station from which traffic changeover is to be performed, which procedures are executed on RNC shown in FIG. 1 and FIG. 2;
FIG. 5 is a flowchart for describing an operation of the MSC of FIG. 1;
FIG. 6 is a view schematically showing a cell arrangement for describing an operation of MSC of FIG. 1 for selecting adjacent RNCs with priority degrees;
FIG. 7 is a flowchart for describing an operation of MSC of FIG. 1 for selecting adjacent RNCs with priority degrees;
FIG. 8 is a view showing an example of LAI assignment to RNC for describing an operation of MSC of FIG. 1 for selecting an RNC with the same LAI;
FIG. 9 is a sequence diagram for describing an operation (changeback sequence) of the system of FIG. 1 and FIG. 2;
FIG. 10 is a block diagram showing a network construction of a 3GPP network;
FIG. 11 is a view showing an ATM cell format;
FIG. 12 is a block diagram showing an apparatus construction of a UTRAN; and

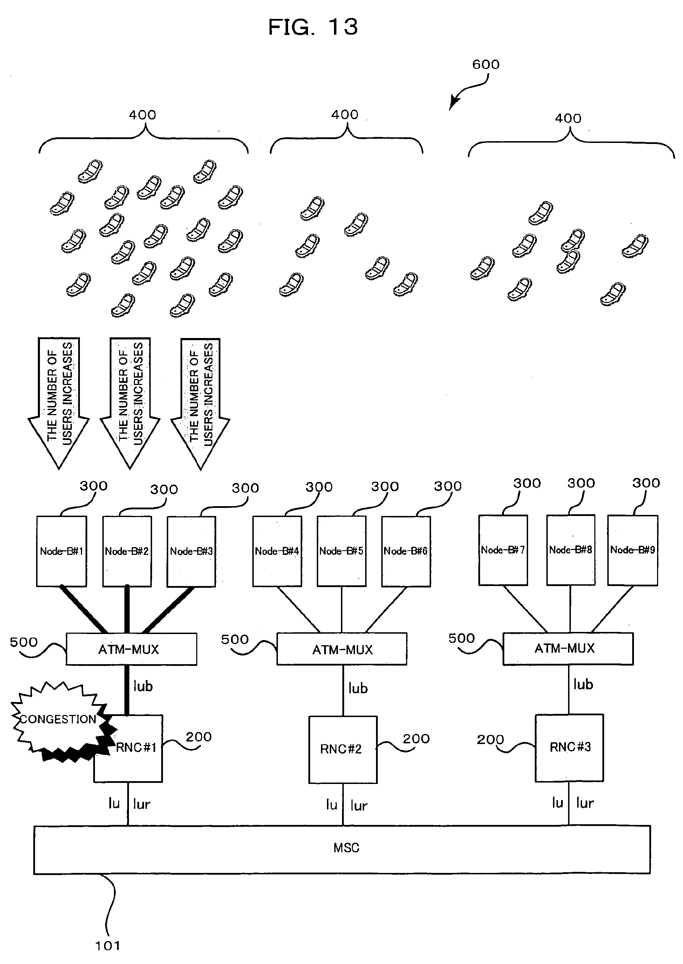

FIG. 13 is a block diagram for describing an issue occurring when congestion is caused in the system of FIG. 10 and FIG. 12.

### DESCRIPTION OF THE PREFERRED EMBODIMENT(S)

One preferred embodiment of the present invention will now be described with reference to the accompanying relevant drawings.

### [A] One Preferred Embodiment:

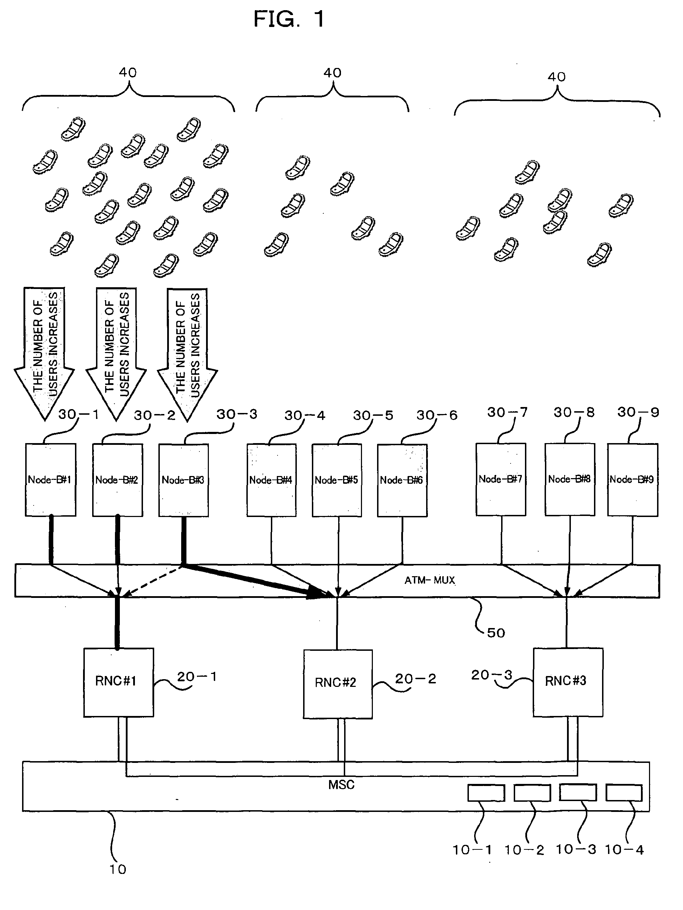

FIG. 1 is a block diagram showing a construction of a 3GPP (Third Generation Partnership Project) network system according to one preferred embodiment of the present invention. The system of FIG. 1, as in the case of the above-described system [network (UTRAN) 600] includes: a Mobile Switching Center (MSC) 10, which is a constituent of the above-mentioned CN 100 and is a host apparatus; multiple Radio Network Controllers (RNCs) 20-1 through 20-N (in FIG. 1 , *N* = 3; apparatus identification Nos. #1, #2, and #3 are given), each of which is a traffic processor communicably connected to the MSC 10 through an "Iu" interface and an "Iur" interface; an ATM multiplexer (ATM-MUX) 50 communicably connected to each of the RNCs 20-i (*i* = 1 through *N*) through an "Iub" interface; multiple radio base stations (Node-Bs) 30-1 through 30-M (in FIG. 1, *M* = 9; apparatus Nos. #1 through #9 are given) communicably connected to the ATM multiplexer 50 through "Iub" interfaces; multiple User (mobile) terminals (UE: User Equipment) 40, which carries out radio communication with the radio base stations 30-j (*j* = 1 through *M*) in radio service areas formed by the radio base station 30-j.

That is, the present system includes an ATM multiplexer 50 which is common to RNCs 20-i and radio base stations 30-j. In other words, according to the previous art, a single RNC 200 and multiple radio base stations 300 are connected via an ATM multiplexer 500, whereby lines between multiple radio base stations 300 and one RNC 200 are multiplexed. In contrast, in the present embodiment, multiple RNCs 20-i and multiple radio base stations 30-j are connected (line-multiplexed) via a single ATM multiplexer 50, and an arbitrary RNC 20-i and an arbitrary radio base station 30-i are connected by setting an internal connection (path) in the ATM multiplexer 50.

With this arrangement, when the traffic is increased to exceed the traffic amount (threshold value) which can be processed by a network apparatus (RNC 20-i), the ATM multiplexer 50 changes the paths to make another RNC 20-i process the traffic. For example, as shown in FIG. 1 with the thick solid line, if the traffic amount of radio base stations 30-1 through 30-3 under control of the RNC 20-1 is increased to exceed the processing ability of the RNC 20-1, the uplink traffic from the radio base station 30-3 is switched to the RNC 20-2 by the ATM multiplexer 50, whereby the traffic is processed by the RNC 20-2.

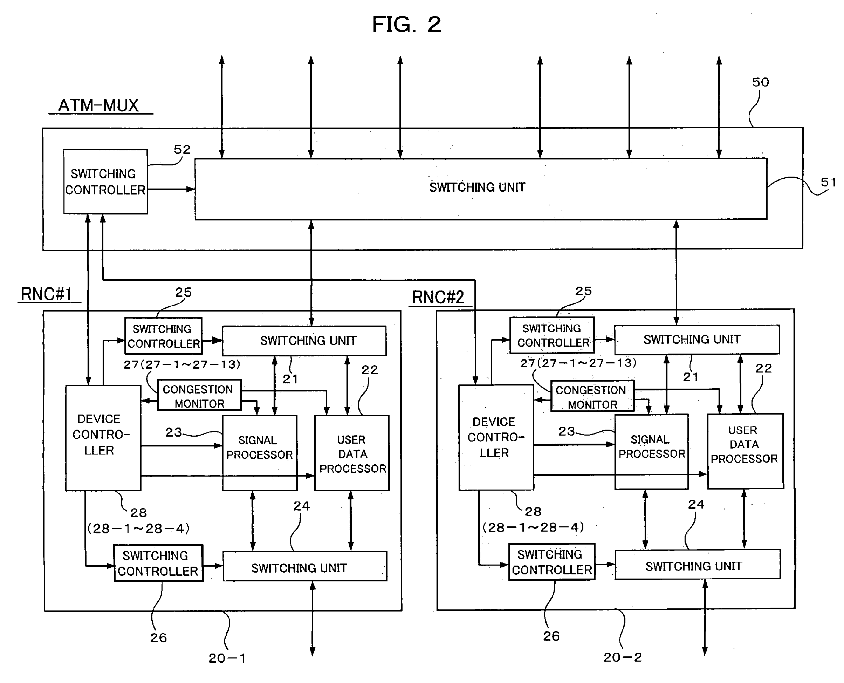

To realize this processing, the RNC 20-i and the ATM multiplexer 50 are given a construction such as that shown in FIG. 2 (in FIG. 2, attention is paid only to the RNC 20-1 and 20-2) . That is, as shown in FIG. 2, the RNC 20-i includes: a switching unit 21; a user data processor 22; a signal processor 23; a switching unit 24; switching controllers 25 and 26; a congestion monitoring unit 27; and an apparatus controller 28. The ATM multiplexer 50 includes: a switching unit 51 ; and a switching controller 52.

Here, in the ATM multiplexer 50, the switching unit (line changeover unit) 51 is capable of switching line (path) connection between any one of the radio base stations 30-j and any one of the RNCs 20-i. Inter-apparatus signals, such as control signals, and user data which are received from each radio base station 30-j using uplink ATM cells, can be transferred to any of the RNCs 20-i under control of the switching controller 52. In addition, inter-apparatus signals and user data which are received from the RNC 20-i using downlink ATM cells can be transferred to any of the radio base stations 30-j.

The switching controller 52 communicates with the apparatus controller 28 of the RNC 20-i, thereby controlling a switching operation of the switching unit 51 in response to an instruction from the RNC 20-i which detects a congested state. When a congested state is detected with respect to any of the RNCs 20-i, switching setting (line changeover control) of the switching unit 51 is carried out (changed) so that at least a part of the traffic to be processed on the RNC 20-i is processed by another RNC 20-k (*k* = 1 through *N*; *k* ≠ *i*).

On the RNC 20-i, in accordance with control from the switching controller 25, the switching unit 21 transfers ATM uplink cells received from the ATM multiplexer 50 to either the user data processor 22 or the signal processor 23, and also transfers downlink ATM cells from the user data processor 22 and the signal processor 23 to the ATM multiplexer 50 (switching unit 51). Inter-apparatus signals are processed by the signal processor 23, and user data is processed by the user data processor 22.

The user data processor 22 processes uplink and downlink user data. The signal processor 23 processes inter-apparatus signals such as uplink and downlink control signals. The switching unit 24, in accordance with control from the switching controller 26, transfers the user data and the inter-apparatus signals, which have been processed by the user data processor 22 and the signal processor 23, respectively, to the MSC 10 and transfers downlink user data received from the MSC 10 to the user data processor 22, and transfers downlink inter-apparatus signals to the signal processor 23.

That is, the user data processor 22 and the signal processor 23 function as a traffic processing unit which processes traffic between the RNC 20-i and the radio base station 30-j.

The switching controller 25 controls a switching operation of the switching unit 21 on the ATM multiplexer 50 side in accordance with control from the apparatus controller 28. Likewise, the switching controller 26 controls a switching operation of the switching unit 24 on the RNC 20-i side in accordance with control from the apparatus controller 28.

The congestion monitoring unit (congestion detecting means) 27 monitors a state of processing performed on the user data processor 22 and the signal processor 23, thereby detecting an occurrence of a congestion state. If an occurrence of a congestion state is detected, it is notified to the apparatus controller 28.

Thus, the congestion monitoring unit 27 includes: a memory (traffic threshold holding unit) 27-1 for holding a threshold for the traffic amount, a traffic comparing unit 27-2 which compares the current traffic amount, which is a monitoring result, with the threshold value (for example, a process limit value or the value obtained by subtracting a margin value from the limit value) held in the memory 27-1; and a congestion judging unit 27-3 which makes a judgment that congestion is occurring if the comparison result obtained by the traffic comparing unit 27-2 reveals that the current traffic amount exceeds the above-mentioned threshold value.

The apparatus controller (control means) 28 controls the operation of the whole of the RNC 20-i. More concretely, the apparatus controller 28 controls the operation of the above-described user data processor 22, signal processor 23, switching controllers 25 and 26, and communicates with the switching controller 52 of the ATM multiplexer 50 to control the switching operation (line changeover processing) in the ATM multiplexer 50 (switching unit 51) . That is, this apparatus controller 28 makes it possible, when the congestion monitoring unit 27 detects an occurrence of a congestion state, to control switching setting in the ATM multiplexer 50 to transfer the traffic (uplink ATM cells) destined to the RNC 20-i to another RNC 20-i, to make the RNC 20-i process the traffic.

Now, referring to FIG. 3 through FIG. 5, a description will be made of an operation of the system of the present embodiment having the above-described construction.

### (1) Whole Operation

As shown in FIG. 3, it is assumed that the RNC 20-i regularly reports its traffic processing state to the MSC 10 with inter-apparatus signals (step S1). In this instance, the traffic processing state is acknowledged by means of the congestion monitoring unit 27 which monitors the user data processor 22 and the signal processor 23.

In such a state, as shown in FIG 1, for example, when the number of UE 40 present in a radio service area of radio base stations 30-1 through 30-3, which are under control of the RNC 20-1, is increased, the traffic also thereby being increased, the congestion monitoring unit 27 of the RNC 20-1 (RNC#1) detects an occurrence of congestion (step S2).

In this case, the RNC 20-1 makes preparations for transferring the traffic of any of the radio base stations 30-1 through 30-3 to another RNC 20-i under control of the same MSC 10. That is, in order to decrease the traffic amount to the processing-available traffic thresholdwhich has been defined beforehand, the apparatus controller 28 determines which one of the radio base stations 30-1 through 30-3 under control of the RNC 20-1 is subjected to line switching to another RNC 20-i (step S3). In this instance, the determination (calculation) method will be described more in detail later.

After the above determination, on the RNC 20-1, the apparatus controller 28 issues a changeover destination request message to the MSC 10, which is a host apparatus, via the signal processor 23 (step S4). That is, the apparatus controller 28 functions as a changeover destination request issuing unit 28-1 which issues, when a congested state is detected, a traffic changeover request to the MSC 10 which is a host apparatus. Here, request parameters in this changeover destination request message contain at least the traffic amount and the number of base stations to be changed over, as shown in table 1.

**Table 1: Various Parameter**

| Message parameter for changeover | Message used (in FIG. 3) |
|---|---|
| Traffic to be changed over | Request for changeover destination |
| The number of radio base stations (Node-B) | Request for changeover destination |
| Radio base station (Node-B) data | Changeover user information notification |
| Common channel parameter | Changeover user information notification |

When receiving the above-mentioned changeover request message, the MSC 10 evaluates (judges) which one of the RNCs 20-k (*k* = 2 through *N*) can accommodate the traffic whose changeover is demanded (step S5), and the apparatus number #*k* (for example, *k* = 2) of the determined RNC 20-k is sent to the RNC 20-1, which is the requester, as a chagenover destination response message (step S6). In this instance, for this judgment or determination, the MSC 10 regularly monitors the traffic of the RNCs 20-i under its control.

That is, as shown in FIG. 1, the MSC 10 has the following functions:
(a) a function as a traffic monitoring unit 10-1 which monitors the traffic of each of the multiple RNCs 20-i;
(b) a function as a changeover destination receiving unit 10-2 which receives the above-mentioned changeover destination request message issued by the RNC 20-i that has detected a congestion state;
(c) a function as a changeover destination RNC determining unit 10-3 which selects and determines, when the changeover destination receiving unit 10-2 receives the above changeover destination request message, another RNC 20-k which is to process the traffic based on monitoring results obtained by the traffic monitoring unit 10-1;
(d) a function as a notifying unit 10-4 which notifies the RNC 20-i, which is an issuer of the above-mentioned changeover destination request message, of information about the RNC 20-k determined by the changeover destination RNC determining unit 10-3 as the above-mentioned changeover destination response message.

The above changeover (changeover permission) message is received by the apparatus controller 28 of the RNC 20-1 via the signal processor 23. The apparatus controller 28 notifies the destination RNC 20-2 of user (call) information accommodated in the destination radio base station 30-3 and the radio base station data through the "Iur" interface via the signal processor 23 as a changeover user information notification message (step S7) . In this instance, as shown in the above table 1 , the changeover user information notification message includes not only data of the radio base station 30-j but also common channel parameters.

The above changeover user information notification message is received by the apparatus controller 28 of the RNC 20-2 via the signal processor 23, and the apparatus controller 28 carries out necessary setting to the signal processor 23, the user data processor 22, and the switching units 21 and 24, based on the above information in the message, for preparation for traffic switching (reception) based on the above information of the message (step S8) . After completion of the setting, the apparatus controller 28 sends back a changeover preparation completion notification message to the RNC 20-1, which is the original RNC 20-1 from which changeover is to be carried out, via the signal processor 23 (step S9).

The above-mentioned changeover preparation completion notification message is received by the apparatus controller 28 via the signal processor 23 of the RNC 20-1. The apparatus controller 28 thereby perceives that preparations for changing over of traffic are completed, and instructs (requests) the ATM multiplexer 50 and the MSC 10 for changeover (step S10 and step S12). Upon receipt of the changeover request, on the ATM multiplexer 50, the switching controller 52 performs switching (path) setting for the switching unit 51 so that a communication path is set between the radio base station 30-3 and the RNC 20-2. The MSC 10 also performs setting necessary for communication path setting between the radio base station 30-3 and the RNC 20-2.

The apparatus controller 28 functions as a line changeover controller unit which (*i*) receives information about the RNC 20-2, which has been selected and determined by the MSC 10 in response to the above-mentioned changeover destination request message, as a response to the change over destination request message, and (*ii*) controls switching setting in the ATM multiplexer 50 based on the above information.

Upon completion of the above setting, the ATM multiplexer 50 notifies the apparatus controller 28 of the RNC 20-1, which is an issuer of the request, of a changeover completion notification (step S11 and S13). Upon receipt of the notification, the apparatus controller 28 of the RNC 20-1 releases (release setting between the RNC 20-1 and the radio base station 30-3 with respect to the user data processor 22, the signal processor 23, and the switching units 21 and 24) resources which have been assigned to the traffic (user) that is an object of the changeover (step S14).

With such an arrangement, ATM cells received from the radio base station 30-3 from then on are transferred to the RNC 20-2 in the ATM multiplexer 50 and processed by the RNC 20-2 so that congestion at RNC 20-1 is avoided.

Accordingly, as communication becomes available without causing a system down or user limitation, a state where communication or telephone calls cannot be made on the user end because of a congested state can be avoided.

### (2) Method for Detection of Congestion

Next, a description will be made of a method for detecting congestion in the RNC 20-i (the above-mentioned step S2).

### (2.1) Congestion Detection by Managing the Number of Users Connected

As a first method, there is a method for detecting an occurrence of a congested state by managing the number of connected users (UE) on the RNC 20-i. When the number becomes equal to or greater than a congestion judgment reference value, a decision is made that a congested state is occurring. In principle, the apparatus processing limitation value can be used as the congestion judgment reference value. In practical cases, however, a value slightly smaller than the limitation value can be used as the reference value, taking a certain degree of margin. The RNC 20-i reserves a resource for each UE 40 while communicating with the UE 40 under its control. By means of counting the number of the resources, it is possible for the RNC 20-i to manage the number of users being connected thereto. For example, when a piece of UE 40 makes/receives a call, the RNC 20-i reserves a resource for the UE 40. When the UE 40 disconnects the call, the RNC 20-i releases the resource. Thus, by counting such resources, it is possible for the RNC 20-i to manage the number of users being connected thereto.

The above function, as shown in FIG. 2, can be realized by providing the congestion monitoring unit 27 (the apparatus controller 28 is also applicable) with functions as (*i*) a connected user number (the number of mobile terminals) monitoring unit 27-4 which monitors the number of users (UE) connected to the radio base station 30-j, (*ii*) a memory 27-5 for storing a threshold value for the number of connected users, (*iii*) a connected user number comparing unit 27-6 which compares the threshold value stored in the memory 27-5 with the number of connected users monitored by the connected user number monitoring unit 27-4, and (*iv*) a congestion judging unit 27-8 which makes a judgment that a congested state is occurring when the comparison result of the connected user number comparing unit 27-6 reveals that the number of connected users monitored by the congestion monitoring unit 27-7 exceeds the above-mentioned threshold value.

### (2.2) Congestion Detection by Traffic Amount Management

A second method determines a reference threshold value, as the traffic amount differs depending upon types of services used by users. Then, the conversion values corresponding to the reference value are determined as shown in, for example, the following table 2. On the basis of the accumulative value of the conversion values, an occurrence of a congestion state is detected. That is, when the accumulative value reaches the above-mentioned threshold value, the RNC 20-i makes a judgment that congestion has occurred, thereby detecting the congestion.

**Table 2: Traffic Conversion Table**

| Service | Traffic conversion value |
|---|---|
| Sound | 1 |
| Visual telephone | 5 |
| Data communication | 4 |

As shown in FIG. 2, the above function is realized by providing the congestion monitoring unit 27 (the apparatus controller 28 is also applicable) with functions as (*i*) a monitoring unit by service type 27-9 which monitors traffic by service type, (*ii*) a conversion unit 27-10 which converts the monitoring result of the service type monitoring unit 27-9 by assigning weights to the monitoring result of the service type monitoring unit 27-9, (*iii*) a conversion value holding unit 27-11 which holds threshold value with respect to the conversion value (accumulative value) obtained by the converting unit 27-10, (*iv*) a conversion value comparing unit 27-12 which compares the conversion value obtained by the converting unit 27-10 with the threshold value held in the conversion value holding unit 27-11, and (*v*) a congestion judging unit 27-13 which makes a judgment that a congested state is occurring when the comparison result reveals that the conversion value obtained by the converting unit 27-10 exceed the threshold value. In this instance, the type of service is notified from the UE 40 by means of an RRC (Radio Resource Control) message (more accurately, notified to the MSC 10 by means of an RRC message, and a service setting instruction is notified from the MSC 10 to the RNC 20-i), and it is thus possible to distinguish the type of service using this message (notification).

### (3) Changeover Radio Base Station Calculation (Determination) Method

Next, a description will be made hereinbelow of a method for calculating (determining) a changeover radio base station from which traffic is changed over in the RNC 20-i (step S3).

The RNC 20-i adds up the number of connected users and the traffic amount, which have been used in the above-described congestion detection, for each radio base station 30-j. For example, when the traffic amount is managed, the traffic amounts of the radio base stations 30-j (apparatus number #*j*) are added up as shown in the following table 3. When the total sum exceeds a threshold value ("200" in table 3), a radio base station 30-j which is to be subjected to changeover is selected and determined.

That is, in this case, the congestion monitoring unit 27 (or the apparatus controller 28) monitors traffic in units of radio base stations 30-j under control of the RNC 20-i. The RNC 20-i (apparatus controller 28) is capable of carrying out changeover processing of traffic (lines) in units of radio base stations 30-j. The function can be realized, for example, by providing the apparatus controller 28 with a function as a changeover object base station line determining unit 28-2 (see FIG. 2) which determines the line of the radio base station 30-j that treats traffic to be processed by another RNC 20-k as a changeover object base station line.

**Table 3: Addition of Traffic Amount of the Radio Base Stations**

| Radio base station number | Traffic amount |
|---|---|
| #1 | 10 |
| #2 | 12 |
| #3 | 20 |
| #4 | 40 |
| #5 | 30 |
| #6 | 31 |
| #7 | 25 |
| #8 | 12 |
| #9 | 36 |
| Total sum | 216 |
| Threshold value | 200 |

At this time, the above determining unit 28-2 selects and determines an object radio base station 30-j to be changed over so that the total sum falls below the above threshold value. The following are descriptions of concrete example.

### (3.1) Minimum Traffic (the Number of Users being Connected)

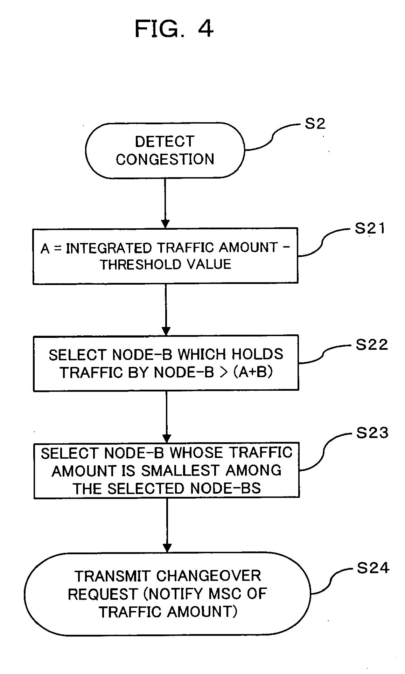

As shown in FIG. 4, when a congestion state is detected (step S2), the RNC 20-i (apparatus controller 28) calculates a difference (*A*) between the current total sum (addition) of the traffic amount (or the number of users connected) and the threshold (step S21), and selects radio base stations 30-j which accommodate traffic amounts exceeding *A* + *B* (*B* is a margin value) (step S22) . Further, of the selected radio base stations 30-j, a radio base station 30-j accommodating the minimum traffic amount is selected (step S23). Here, the reason why the margin value *B* is given is that selection of a radio base station 30-j whose traffic amount is close to *A* will soon result in a congestion state again.

As described in step S4 of FIG. 3, the RNC 20-i (apparatus controller 28) which has detected a congestion state issues a changeover destination request message which contains the traffic amount of the selected radio base station 30-j as a parameter to the MSC 10 (step S24).

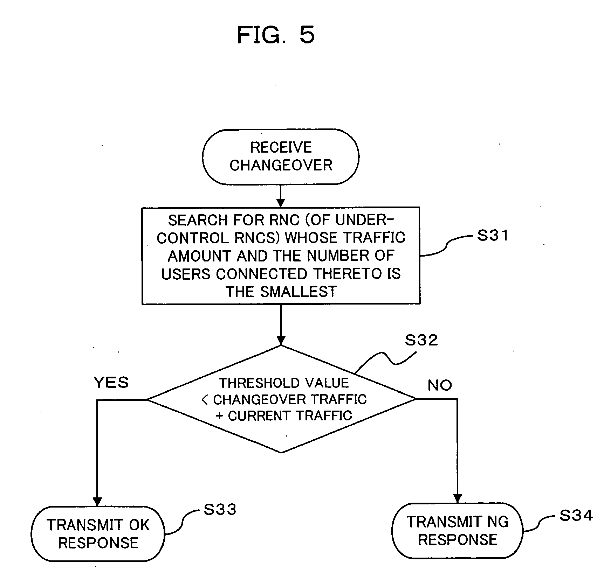

As shown in FIG. 5, upon receipt of the changeover destination request message, the MSC 10 searches for an RNC 20-k whose traffic amount is the smallest among the RNCs 20-k which are under control of the MSC 10, excluding the RNC 20-i which is an issuer of the request (step S31) . The MSC 10 then evaluates whether or not the found-out RNC 20-k can accommodate the traffic amount to be changed over, which has been notified by the above changeover destination request message, in addition to the current traffic (threshold value < the traffic to be changed over + the current traffic?: step S32)

If it is evaluated that the RNC 20-k can accommodate the traffic amount, the MSC 10 determines that the RNC 20-k is a changeover destination RNC 20-k to which traffic is to be changed over, as already described in step S6 of FIG. 3, and the MSC 10 sends back a changeover destination response message (OK response), including the apparatus number #k, to the RNC 20-i which is an issuer of the changeover request (YES route of step S32 to step S33). On the other hand, if the accommodation is unavailable, the MSC 10 sends a NG response to the RNC 20-i which is an issuer of the changeover request (No route of step S32 through step S34).

### (3.2) Adjacent RNC with Priority

Next, a description will be made of a method for selecting, with priority, a radio base station 30-j which is adjacent to the radio base station 30-j being under control of the RNC 20-i to which traffic changeover is to be performed, as an object changeover radio base station 30-j from which traffic changeover is to be performed.

This is because of the following reason. If a changeover operation should be performed from a radio base station 30-j which is not adjacent to a radio base station 30-j that is under control of the RNC 20-i, the "Iur" interface of the RNC 20-i at which a congestion state occurs must be used when UE 40 performs handover. To avoid this, the above-mentioned radio base station 30-j is selected with priority.

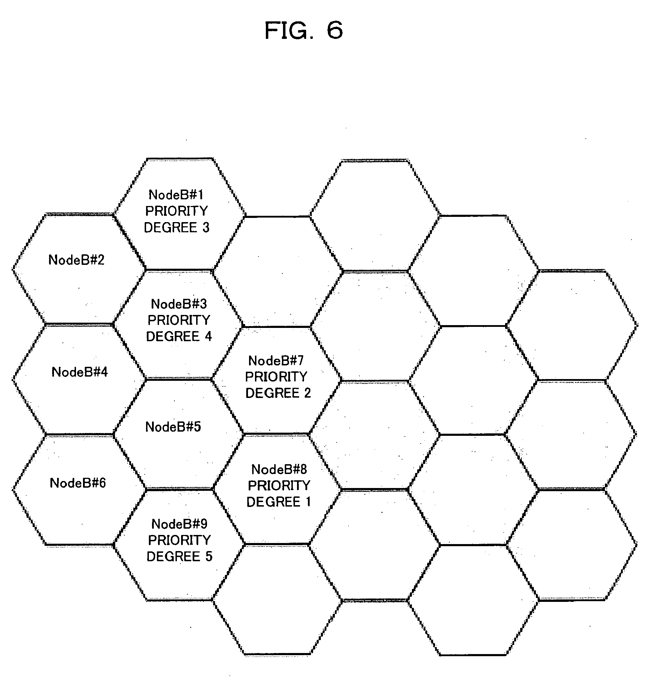

That is, in a cell arrangement of FIG. 6, priority orders are given, as shown in the following table 4 and FIG. 6, to the radio base stations 30-j which are adjacent to the radio base stations 30-j that are under control of the RNC 20-i (such priority order information is held and managed in the apparatus controller 28 for each RNC 20-i).

**Table 4: Priority Given to Radio Base Stations From Which Traffic Changeover is to be Performed**

| Priority order | Radio base station No. |
|---|---|
| 1 | #8 |
| 2 | #7 |
| 3 | #1 |
| 4 | #3 |
| 5 | #9 |

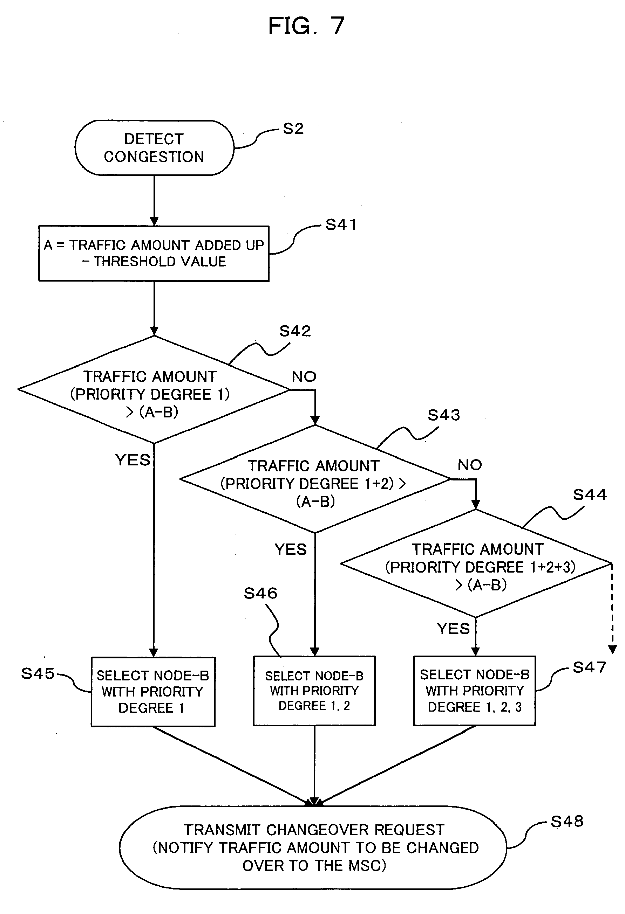

Then, as shown in FIG. 7, if congestion is detected at any RNC 20-i (step S2), the congested RNC 20-i (apparatus controller 28) calculates a difference between the current (added up) traffic amount and the threshold value (*A*) (step S41). Then it is evaluated whether or not the traffic amount at the radio base station 30-8 (apparatus No. #8) whose priority order is "1" is greater than a value of (*A* - *B*) (where *B* is a margin value) (step S42).

As a result, if the evaluation result is positive, the congested RNC 20-i (apparatus controller 28) selects and determines the radio base station 30-8 as an object from which traffic is changed over (from YES route of step S42 to step S45), and as shown in step S4 of FIG. 3, a changeover destination request message, which includes the apparatus number #8 of the radio base station 30-8 and the traffic amount to be changed over as parameters, to the MSC 10 via the signal processor 23 (step S48).

On the other hand, if the traffic amount at the radio base station 30-8 (apparatus No. #8) whose priority order is "1" is equal to or smaller than a value of (*A* - *B*), the traffic amount at the radio base station 30-8 is added to the traffic amount at the radio base station 30-7 (apparatus No. #7) whose priority order is "2", and it is evaluated whether or not the result is greater than a value of (*A* - *B*) (from NO route of step S42 to step S43). As a result, if the total amount of the traffic at the radio base stations 30-8 and 30-7 whose priority orders are 1 and 2, respectively, is greater than a value of (*A* - *B*), the congested RNC 20-i (apparatus controller 28) selects the radio base stations 30-8 and 30-7 as objects from which traffic is changed over (YES route of step S43 to step S46), and as described in step S4 of FIG. 3, a changeover destination request message including the apparatus numbers #8 and #7 of the radio base stations 30-8 and 30-7 and the traffic amount to be changed over as parameters are sent to the MSC 10 via the signal processor 23 (step S48).

In contrast, if the total amount of the traffic at the radio base stations 30-8 and 30-7 whose priority orders are 1 and 2, respectively, is greater than a value of (*A* - *B*), the congested RNC 20-i (apparatus controller 28) is further added to the traffic amount at the radio base station 30-1 whose priority order is "3" (from NO route of S43 to step S44).

As a result, if the total amount of the traffic at the radio base stations 30-8, 30-7, and 30-1 whose priority orders are 1, 2, and 3, respectively, is greater than a value of (*A* - *B*), the congested RNC 20-i (apparatus controller 28) selects and determines the radio base stations 30-8, 30-7, and 30-1 as objects fromwhich traffic is changed over (from YES route of step S44 to step S47), and as described in step S4 of FIG. 3, a changeover destination request message, which includes the apparatus numbers #8, #7, and #1 of the radio base station 30-8, 30-7, and 30-1, respectively, and the traffic amount to be changed over as parameters, to the MSC 10 via the signal processor 23 (step S48).

After that, in a similar manner, the RNC 20-i (apparatus controller 28) sequentially and accumulatively selects and determines radio base stations 30-j in the order of priority, until the total traffic amount exceeds the traffic amount (*A* - *B*) necessary for the total sum of traffic amount to fall below the above threshold value. At the time when the total traffic amount exceeds the above traffic amount, the RNC 20-i (apparatus controller 28) issues a changeover destination request message to the MSC 10.

Upon receipt of the above changeover destination request message, the MSC 10 sends back an OK response or an NG response to the RNC 20-i which is an issuer of the request, following the similar procedures described in steps S31 through S34 with reference to FIG. 5.

That is, in the present example, the changeover object base station line determining unit 28-2 (see FIG. 2) selects and determines, with priority, the line of a radio base station which is adjacent to a radio base station 30-j connected to another RNC 20-k, which is the destination of traffic changeover, as the above-mentioned changeover object base station line.

### (3.3) Identical LAI (Location Area Identifier) State

In cases where the radio base station 30-j which is an object of traffic changeover is selected and determined by the above-described procedures in item (3.1) and (3.2), and where a changeover destination request message is issued to the MSC 10, the MSC 10 judges (calculates) and determines which one of the RNCs 20-k is capable of accommodating the traffic to be changed over, as described in step S5 with reference to FIG. 5. At that time, it is evaluated whether or not the LAI assigned to the original RNC 20-k from which traffic is changed over and the LAI assigned to the RNC 20-k to which traffic is changed over are identical.

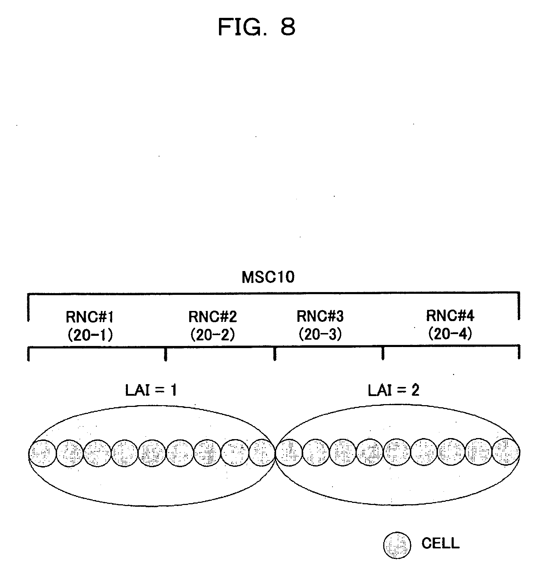

The LAI is an ID which is assigned to each position registration area for managing the positions of UE 40. For example, in FIG. 8, two LAIs are assigned to areas under control of the MSC 10, and LAI = 1 is assigned to the RNC 20-1 (#1) and the RNC 20-2 (#2), and LAI = 2 is assigned to the RNC 20-3 (#3) and the RNC 20-4 (#4).

Here, if traffic of a cell (radio base station 30-j) managed by the RNC 20-2 (#2) is changed over to the RNC 20-3 (#3), the position registration area is changed, thereby raising a necessity of position registration. This causes further increase in traffic at the time of congestion. Thus, the MSC 10 evaluates whether or not the LAI assigned to the original RNC 20-k from which traffic is changed over and the LAI assigned to the RNC 20-k to which traffic is changed over are identical. If they differ from each other, another RNC 20-k is searched for once again.

That is, in the present example, when the changeover destination RNC determining unit 10-3 (see FIG. 1) selects and determines a RNC 20-k which is a destination RNC 20-k to which traffic is to be changed over, a traffic processing apparatus identical in the identical location registration area of UE 40 is selected and determined.

### (4) Changeback Sequence

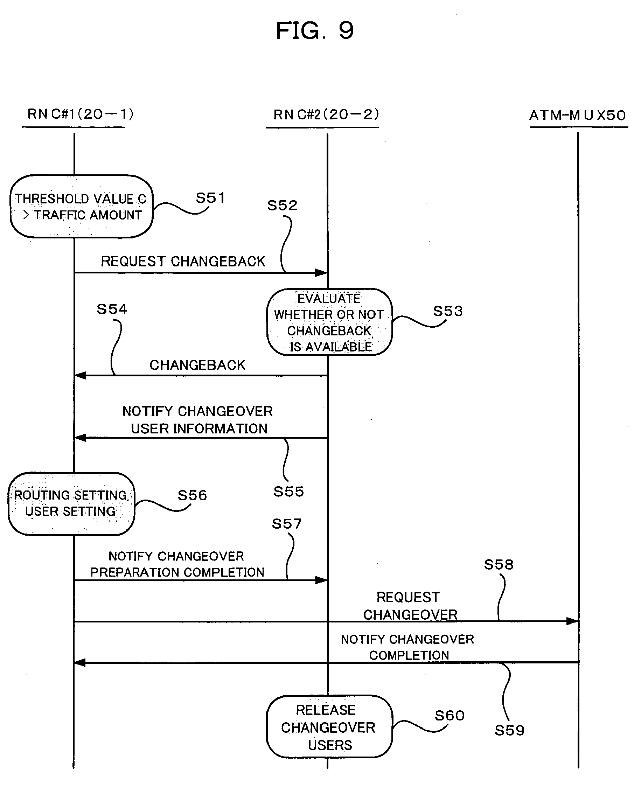

Next, referring to the sequence diagram of FIG. 9, a description will be made hereinbelow of a case in which traffic of the radio base station 30- j whichhas been changed over to another RNC 20-k (for example, RNC 20-2) is changed back to the original RNC 20-1 when the amount of traffic of the RNC 20-i (for example, RNC 20-1) in congestion is decreased so that a congestion state is solved.

The congestion monitoring unit 27 of the RNC 20-1 (apparatus controller 28) monitors whether or not the current traffic amount is smaller than a value of (threshold value - *C*) (*C* is a margin value), thereby monitoring solving of a congested state. If it is judged that a congested state is solved (step S51), the signal processor 23 generates a changeback request message including a value of [the traffic amount - (threshold value - *C*)], and notifies the RNC 20-2 of the message (step S52).

The changeback request message is received on the RNC 20-2 by means of the apparatus controller 28 via the signal processor 23. The apparatus controller 28 of the RNC 20-2 compares the total traffic amount (the traffic amount to be changed back) of the radio base station 30-j (for example, radio base station 30-3) from which traffic is to be changed back with a value of [the traffic amount - (threshold value - *C*)] to evaluate whether or not a changeback operation is available (step S53).

That is, as a result of the above comparison, if the traffic amount to be changed back is greater than the notified value, changeback to the RNC 20-1 will cause a congested state of the RNC 20-1 once again. Thus, in that case, the RNC 20-2 (apparatus controller 28) sends back an NG response to the RNC 20-1 by means of the signal processor 23. If the traffic amount to be changed back is equal to or smaller than the value of [the traffic amount - (threshold value - *C*)], the RNC 20-2 sends back an OK response to the RNC 20-1 by means of the signal processor 23 (step S54).

When an OK response is sent back to the RNC 20-1, the RNC 20-2 (apparatus controller 28) notifies the RNC 20-1 of user setting information of the radio base station 30-j from which traffic is to be changed back (step S55). When receiving the notification by means of the apparatus controller 28 via the signal processor 23, the RNC 20-1 performs necessary setting such as user setting of an object user for a changeover operation and routing setting (step S56).

Upon completion of preparation for a changeback operation, the RNC 20-1 (apparatus controller 28) issues a changeover preparation completion notification message to the RNC 20-2 by means of signal processor 23 (step S57), and also issues a changeover request message to the ATM multiplexer 50 (step S58).

Upon receipt of the above changeover request message, the ATM multiplexer 50 changes the setting of the switching unit 51 by means of the switching controller 52 so that the traffic between the RNC 20-2 and the radio base station 30-j is transferred to the original RNC 20-1, and then issues a changeover completion notification to the RNC 20-1 (step S59).

Further, the RNC 20-2 releases (releaseof the traffic between the user data processor 22, the signal processor 23, the switching units 21 and 24 and the radio base station 30-3) the resources which have been assigned to the traffic (user) to be changed back (step S60).

As a result, hereafter, the traffic which has been processed on the changeover destination RNC 20-2 is processed once again by the RNC 20-1. A congestion state is prevented from newly occurring at the destination RNC 20-2, and it is possible for users to continue normal communication.

That is, in this case, the RNC 20-i (apparatus controller 28) has such functions as (*i*) a recovery-from-congestion detecting unit 28-3 which monitors a processing state of the traffic processor (the user data processor 22 and the signal processor 23) to detect recovery from a congestion state, and (*ii*) a line changeback controller 28-4 which controls line changeover processing of the ATM multiplexer 50 (switching unit 51) to perform line changeback processing so that the traffic which has been changed over to another RNC 20 -k is processed by the original RNC 20-i.

The present invention should by no means be limited to the above-illustrated embodiment, and various changes or modifications may be suggested without departing from the gist of the invention.

For example, although congestion detection is performed by the RNC 20-i in the above embodiment, it can be carried out on the MSC 10 end. Further, although traffic (communication line) which is an object to be changed over is selected and determined in units of radio base stations 30- j in the above embodiment, only a part of communication lines of a radio base station 30-j can be an object to be changed over.

As described so far, according to the present invention, even if a congested state occurs in a radio network system, it is still possible to continue communication without causing a system down or limitation in generation/reception of calls. Hence, it is possible to avoid with reliability a state where users (mobile terminals) cannot perform data communication or make telephone calls, so that the present invention is considerably useful in the field of radio communication.

## Claims

1. A communication traffic changeover method for use in a radio network system including: one or more mobile terminals (40) ; base station apparatus (30- j : *j* = 1 through M) which communicates with the mobile terminals (40) by radio communication; a plurality of traffic processing apparatuses (20-i : *i* = 1 through *N*) communicably connected to the base station apparatus (30-j), which traffic processing apparatuses (20-i) process communication traffic between the base station apparatus (30-j) and the traffic processing apparatuses (20-i) ; a line multiplexing apparatus (50) which multiplexes lines between the base station apparatus (30-j) and the traffic processing apparatuses (20-i), said method comprising:
on said line multiplexing apparatus (50),
performing a line changeover process, if a congested state is detected with respect to any one (20-i) of the traffic processing apparatuses (20-i), in such a manner that at least a part of communication traffic to be processed on the traffic processing apparatus (20-i) is processed on another traffic processing apparatus (20-k: *k* ≠ *i*).

2. A communication traffic changeover method for use in a radio network system as set froth in claim 1,
wherein each of the plurality of traffic apparatuses (20-i) monitors the communication traffic, and
wherein if any of the traffic processing apparatuses (20-i) detects a congested state, the traffic processing apparatus (20-i) controls the line changeover process of the ATM multiplexing apparatus 50 in such a manner that at least a part of communication traffic to be processed by the corresponding traffic processing apparatus (20-i) is processed by said another traffic processing apparatus (20-k).

3. A communication traffic changeover method for use in a radio network system as set froth in claim 2,
wherein the radio network system further includes a host apparatus (10), communicably connected to each of the plurality of traffic processing apparatuses (20-i), for managing the plurality of traffic processing apparatuses (20-i),
wherein the host apparatus (10) monitors communication traffic of the plurality of the traffic processing apparatuses (20-i),
wherein the traffic processing apparatus (20-i) that has detected a congested state issues a changeover destination request for requesting the host apparatus (10) for information about said another traffic processing apparatus (20-k),
wherein the host apparatus (10), upon receipt of the changeover destination request, selects and determines said another traffic processing apparatus (20-k) which is to process said part of communication traffic, and notifies the traffic processing apparatus (20-i), which is an issuer of the changeover destination request, of the information about the determined destination traffic processing apparatus (20-k), and
wherein the traffic processing apparatus (20-i) controls the line changeover process performed by the line multiplexing apparatus (50) based on information about the notified traffic processing apparatus (20-k).

4. A communication traffic changeover method for use in a radio network system as set froth in claim 2,
wherein each of the traffic processing apparatuses (20-i) monitors the communication traffic in units of base station apparatuses (30-j) connected thereto, and controls the line changeover process of the communication traffic in units of the base station apparatuses (30-j).

5. A communication traffic changeover method for use in a radio network system as set froth in claim 2,
wherein the traffic processing apparatus (20-i) detects the congested state by comparison with a threshold value of the communication traffic.

6. A communication traffic changeover method for use in a radio network system as set froth in claim 2,
wherein the traffic processing apparatus (20-i) monitors the number of users who are communicating with the base station apparatus (30-j), and detects the congested state by comparison with a threshold value of the number of users.

7. A communication traffic changeover method for use in a radio network system as set froth in claim 2,
wherein the traffic processing apparatus (20-i) monitors the communication traffic for each type of service, and assign weights to the monitoring result in accordance with the type of service, and detects the congested state by comparison with a threshold value after assignment of weights.

8. A communication traffic changeover method for use in a radio network system as set froth in claim 3,
wherein the traffic processing apparatuses (20-i) determines the line of the base station apparatus (30-j) which treats communication traffic to be processed by said another traffic processing apparatus (20-k) as the changeover object base station line.

9. A communication traffic changeover method for use in a radio network system as set froth in claim 8,
wherein the traffic processing apparatus (20-i) selects and determines the changeover object base station line so that communication traffic to be processed by the traffic processing apparatus (20-i) is equal to or lower than a specific threshold value.

10. A communication traffic changeover method for use in a radio network system as set froth in claim 8 or claim 9, wherein the traffic processing apparatus (20-i) selects and determines, with priority, radio communication paths of a base station apparatus (30-j) adjacent to the base station apparatus (30-j) connected to said another traffic processing unit (20-k), which is the destination to which the communication traffic is to be changed, as the changeover object base station line.

11. A communication traffic changeover method for use in a radio network system as set froth in claim 3, wherein the host apparatus (10), when determining and selecting said another traffic processing apparatus (20-k), selects and determines a traffic processing apparatus (20-i) whose location area of the mobile terminals (40) is the same as that of the traffic processing apparatus (20-i).

12. A communication traffic changeover method for use in a radio network system as set froth in claim 1, wherein when recovery from the congested state is detected, line changeback processing is performed on the line multiplexing apparatus (50) so that the communication traffic, which has been changed over to said another traffic processing apparatus (20-k), is changed back to the original traffic processing apparatus (20-i) to be processes thereon.

13. A radio network system, comprising:
a base station apparatus (30-j) which communicates with one or more mobile terminals (40) by radio communication;
a plurality of traffic processing apparatuses (20-i) communicably connected to the base station apparatus (30-j), which traffic processing apparatuses (20-i) process communication traffic between the base station apparatus (30-j) and the traffic processing apparatuses (20-i);
a line multiplexing apparatus (50) for multiplexing lines between the base station apparatus (30-j) and the traffic processing apparatuses (20-i), said multiplexing apparatus (50) performing a line changeover process, if a congested state is detected with respect to any one (20-i) of the traffic processing apparatuses (20-i), in such a manner that at least a part of communication traffic to be processed on the traffic processing apparatus (20-i) is processed on another traffic processing apparatus (20-k).

14. A traffic processing apparatus for use in a radio network system which includes: one or more mobile terminals (40); base station apparatus (30-j) which communicates with the mobile terminals (40) by radio communication; a plurality of traffic processing apparatuses (20-i) communicably connected to the base station apparatus (30-j), which traffic processing apparatuses (20-i) process communication traffic between the base station apparatus (30-j) and the traffic processing apparatuses (20-i); a line multiplexing apparatus (50) which multiplexes lines between the base station apparatus (30-j) and the traffic processing apparatuses (20-i), said traffic processing apparatus comprising:
a traffic processing unit (22 , 23) which processes the communication traffic;
congestion detecting means (27) which monitors a processing state on traffic processing unit (22 , 23) and detects a congested state; and
control means (28) which controls a line changeover process performed by said line multiplexing apparatus (50) in such a manner that when the congestion detecting means (27) detects a congested state, at least a part of communication traffic to be processed by the corresponding traffic processing apparatus (20-i) is processed by another traffic processing apparatus (20-k).

15. A traffic processing apparatus as set forth in claim 14, wherein said control means (28) includes:
a changeover destination request issuing unit (28-1), which issues, when the congestion detecting means (27) detects a congested state, a changeover destination request for requesting the host apparatus (10), which is communicably connected to each of the plurality of traffic processing apparatuses (20-i) for managing the plurality of traffic processing apparatuses (20-i), for information about said another traffic processing apparatus (20-k); and
a line changeover controlling unit which (*i*) receives the information about said another traffic processing unit (20-k), which is selected and determined by said host apparatus (10) in response to the changeover destination request, as a response to the changeover destination request, and (*ii*) controls said line multiplexing apparatus (50) to execute the line changeover process.

16. A traffic processing apparatus as set forth in claim 14,
wherein said congestion detecting means (27) monitors the communication traffic in units of base station apparatuses (30-j) connected thereto, and
wherein said control means (28) controls the line changeover process of the communication traffic in units of the base station apparatuses (30-j).

17. A traffic processing apparatus as set forth in claim 14,
wherein said congestion detecting means (27) includes:
a traffic threshold value holding unit (27-1) which holds a threshold value for the communication traffic;
a traffic comparing unit (27-2) which compares said threshold value held in said traffic threshold value holding unit (27-1) with the communication traffic; and
a congestion judging unit (27-3) which makes a judgment that a congested state is occurring if the comparison result obtained by said traffic comparing unit (27-2) reveals that the communication traffic exceeds said threshold value.

18. A traffic processing apparatus as set forth in claim 14,
wherein said congestion detecting means (27) includes:
a mobile terminal number monitoring unit (27-4) which monitors the number of mobile terminals connected to said base station apparatus (30-j);
a connected terminal number threshold value holding unit (27-5) which holds a threshold values for said number of mobile terminals connected to said base station apparatus (30-j);
a connected terminal number comparing unit (27-6) which compares said threshold value held in said connected terminal number threshold value holding unit (27-5) with the number of mobile terminals monitored by said mobile terminal number monitoring unit (27-4);
a congestion judging unit (27-8) which makes a judgment that a congested state is occurring if the comparison result obtained by said connected terminal number comparing unit (27-6) reveals that the number of mobile terminals monitored by said mobile terminal number monitoring unit (27-4) exceeds said threshold value.

19. A traffic processing apparatus as set forth in claim 14,
wherein said congestion detecting means (27) includes:
a service type monitoring unit (27-9) which monitors the communication traffic separately for each service type;
a converting unit (27-10) which converts the monitoring result obtained by said service type monitoring unit (27-9) by assigning weights corresponding to said service types;
a conversion value holding unit (27-11) which holds a threshold value for a conversion value obtained by said converting unit (27-10);
a conversion value comparing unit (27-12) which compares a conversion value obtained by said converting unit (27-10) with the threshold value held in said conversion value holding unit (27-11);
a congestion judging unit (27-13) which makes a judgment that a congested state is occurring if the comparison result obtained by said conversion value comparing unit (27-12) reveals that the conversion value obtained by said converting unit (27-10) exceeds said threshold value.

20. A traffic processing apparatus as set forth in claim 14, wherein said control means (28) includes a changeover object base station line determining unit (28-2) which determines the line of the base station apparatus that treats the communication traffic to be processed by said another traffic processing apparatus as a changeover object base station line.

21. A traffic processing apparatus as set forth in claim 20, wherein said changeover object base station line determining unit (28-2) selects and determines the changeover object base station line so that communication traffic processed by said traffic processing unit (22, 23) is equal to or lower than a specific threshold value.

22. A traffic processing apparatus as set forth in claim 20 or claim 21, wherein said changeover object base station line determining unit (28-2) selects and determines, with priority, radio communication paths of abase station apparatus (30- j) adjacent to the base station apparatus (30-j) connected to said another traffic processing unit (20-k), which is the destination to which the communication traffic is to be change, as the changeover object base station line.

23. A traffic processing apparatus as set forth in claim 14, wherein said control means (28) includes:
a recovery-from-congestion detecting unit (28-3) which monitors a state of processing performed by said traffic processing unit (22, 23) and detects recovery from the congested state; and
a line changeback control unit (28-4) which controls, when said recovery-from-congestion detecting unit (28-3) detects recovery from the congested state, a circuit changeover process of said line multiplexing apparatus (50) and performs a line changeback process so that the communication traffic, which has been changed over to said another traffic processing apparatus (20-k), is changed back to the original traffic processing apparatus (20-i) to be processes thereon.

24. A line multiplexing apparatus for use in a radio network system including: one or more mobile terminals (40); base station apparatus (30-j) which communicates with the mobile terminals (40) by radio communication; a plurality of traffic processing apparatuses (20-i) communicably connected to the base station apparatus (30-j), which traffic processing apparatuses (20-i) process communication traffic between the base station apparatus (30-j) and the traffic processing apparatuses (20-i); a line multiplexing apparatus (50) which multiplexes lines between the base station apparatus (30-j) and the traffic processing apparatuses (20-i), said line multiplexing apparatus (50) comprising:
a line changeover unit (51) which is capable of changing line connection between said base station apparatus (30-j) and any of said traffic processing apparatuses (20-i); and
a control unit (52) which performs a line changeover process, if a congested state is detected with respect to any one (20-i) of the traffic processing apparatuses (20-i), in such a manner that at least a part of communication traffic to be processed on the traffic processing apparatus (20-i) is processed on another traffic processing apparatus (20-k).

25. A line multiplexing apparatus as set forth in claim 24, wherein said control unit (52) controls the line changeover under instruction from the traffic processing apparatus (20-i) which has detected the congested state.

26. A host apparatus (10) for use in a radio network system including: one or more mobile terminals (40) ; base station apparatus (30-j) which communicates with the mobile terminals by radio communication; a plurality of traffic processing apparatuses (20-i) communicably connected to the base station apparatus (30-j), which traffic processing apparatuses (20-i) process communication traffic between the base station apparatus (30-j) and the traffic processing apparatuses (20-i); a line multiplexing apparatus (50) which multiplexes lines between the base station apparatus (30-j) and the traffic processing apparatuses (20-i), which host apparatus (10) is communicably connected to each of the plurality of traffic processing apparatuses (20-i) to manage the plurality of traffic processing apparatuses (20-i), said host apparatus (10) comprising:
a traffic monitoring unit (10-1) which monitors communication traffic of the plurality of the traffic processing apparatuses (20-i);
a changeover destination request receiving unit (10-2) which receives a changeover destination request for requesting information about another traffic processing apparatus (20-k) to which at least a part of communication traffic is to be destined, said request being issued by a traffic processing apparatus (20-i) which has detected a congested state;
a changeover destination processing apparatus determining unit (10-3) which selects and determines, upon receipt of the changeover destination request by said changeover destination request receiving unit (10-2), said another traffic processing apparatus (20-k), which is to process said part of communication traffic, based on the monitoring result obtained by said traffic monitoring unit (10-1); and
a notifying unit (10-4) which notifies the traffic processing apparatus (20-i), which is an issuer of the changeover destination request, of the information about the determined destination traffic processing apparatus (20-k), which information is determined by said changeover destination processing apparatus determining unit(10-3).

27. A host apparatus as set forth in claim 26, wherein said changeover destination processing apparatus determining unit (10-3) selects and determines, when determining said another traffic processing apparatus (20-k), the traffic processing apparatus (20-k) whose location area of the mobile terminals (40) is the same as that of the traffic processing apparatus (20-i).
